Europäisches Patentamt

European Patent Office

Office européen des brevets

(19)

(11) Veröffentlichungsnummer: **0 355 294**
**A2**

# (12) EUROPÄISCHE PATENTANMELDUNG

(21) Anmeldenummer: 89110744.3

(22) Anmeldetag: 14.06.89

(51) Int. Cl.⁴: **C04B 30/00**

(30) Priorität: 24.08.88 DE 3828669

(43) Veröffentlichungstag der Anmeldung:
28.02.90 Patentblatt 90/09

(84) Benannte Vertragsstaaten:
**AT BE CH DE ES FR GB IT LI NL SE**

(71) Anmelder: **Degussa Aktiengesellschaft**
**Weissfrauenstrasse 9**
**D-6000 Frankfurt am Main 1(DE)**

(72) Erfinder: **Sextl, Gerhard, Dr.**
**Drosselweg 1**
**D-6458 Rodenbach 2(DE)**
Erfinder: **Reuter, Roland**
**Hoetgerweg 12**
**D-6100 Darmstadt(DE)**
Erfinder: **Kleinschmit, Peter, Dr.**
**Wildaustrasse 19**
**D-6450 Hanau 9(DE)**
Erfinder: **Schwarz, Rudolf, Dr.**
**Taunusstrasse 2**
**D-8755 Wasserlos(DE)**
Erfinder: **Sporys, Ilona**
**Herrenstrasse 9**
**D-6457 Maintal(DE)**

(54) **Formkörper zur Wärmedämmung.**

(57) Formkörper, vorzugsweise plattenförmig, für die Verwendung als Wärmedämmung, bestehend aus
a) einem feinverteilten, pulverförmigen bzw. faserförmigen Stoff,
b) einer mikroporösen Umhüllung und
c) einer gas- und wasserdichten Umhüllung.
Der Formkörper wird hergestellt, indem man den pulverförmigen bzw. faserförmigen Stoff gegebenenfalls trocknet, gegebenenfalls in eine mikroporöse Umhüllung einbringt, gegebenenfalls verpreßt und gegebenenfalls dann trocknet. Danach wird der pulverförmige Stoff mit der mikroporösen Umhüllung in eine gas- und wasserdichte Umhüllung eingebracht. Diese gas- und wasserdichte Umhüllung wird gegebenenfalls evakuiert und verschlossen.

EP 0 355 294 A2

EP 0 355 294 A2

## Formkörper zur Wärmedämmung

Die Erfindung betrifft einen Formkörper, vorzugsweise plattenförmig, für die Verwendung als Wärmedämmung sowie das Verfahren zu seiner Herstellung.

Gegenstand der Erfindung ist ein Formkörper, vorzugsweise plattenförmig, für die Verwendung als Wärmedämmung, bestehend aus

a) einem feinverteilten, pulverförmigen bwz. faserförmigen Stoff

b) einer gas- und wasserdichten Umhüllung, die diesen feinverteilten, pulverförmigen bzw. faserförmigen Stoff enthält.

Der feinverteilte, pulverförmige bzw. faserförmige Stoff kann in einer mikroporösen Umhüllung verpreßt werden.

Der feinverteilte, pulverförmige bzw. faserförmige Stoff kann in einer mikroporösen Umhüllung getrocknet werden.

In einer bevorzugten Ausführungsform kann die mikroporöse Umhüllung, die den feinverteilten, pulverförmigen bzw. faserförmigen Stoff in gepreßtem und getrocknetem Zustand enthält, in die gas- und wasserdichte Umhüllung eingebracht werden.

Den erfindungsgemäßen Formkörper kann man herstellen, indem man

a) gegebenenfalls einen feinverteilten, pulverförmigen bzw. faserförmigen Stoff bei einer Temperatur, die ausreicht, um das Oberflächenwasser auszutreiben, trocknet,

b) den pulverförmigen bzw. faserförmigen Stoff gegebenenfalls verpreßt,

c) den gegebenenfalls getrockneten und gegebenenfalls verpreßten pulverförmigen bzw. faserförmigen Stoff in eine gas- und wasserdichte Umhüllung, die eine Öffnung zum Evakuieren aufweist, einbringt,

d) die gas- und wasserdichte Umhüllung gegebenenfalls evakuiert und

e) die Evakuierungsöffnung der gas- und wasserdichten Umhüllung verschließt.

In einer bevorzugten Ausführungsform des erfindungsgemäßen Verfahrens kann man den feinverteilten pulverförmigen bzw. faserförmigen Stoff in einer mikroporösen Umhüllung trocknen.

In einer besonders bevorzugten Ausführungsform des erfindungsgemäßen Verfahrens kann man den feinverteilten, pulverförmigen bzw. faserförmigen Stoff in einer mikroporösen Umhüllung verpressen und gegebenenfalls danach trocknen.

Als mikroporöse Umhüllung, die im Prinzip dazu dient, den feinteiligen, pulverförmigen Stoff während des Trocknens und Verpressens zusammenzuhalten, kann eine Folie oder ein Vlies-Stoff aus z. B. Polypropylen, Polyester oder Filterpapier verwendet werden.

Im allgemeinen kann zu diesem Zweck eine Folie oder ein Material verwendet werden, das Luft und Feuchtigkeit durchläßt und den feinteiligen, pulverförmigen Stoff zurückhält.

Als feinverteilter, pulverförmiger Stoff kann im Prinzip jeder pulverförmige Stoff verwendet werden, dessen chemische Eigenschaften sich im Laufe der Zeit nicht verändern.

Ausgenommen wird ein feinverteiltes Siliciumdioxid-Material, hergestellt durch Umsetzung von einem Alkaliwasserglas und einer Mineralsäure zur Ausfällung des Siliciumdioxides, das allein ohne Mischung mit anderen Kieselsäuren oder pulverförmigen Stoffen verwendet wird.

Aufgrund der unterschiedlichen Wärmedämmeigenschaften der Stoffe kann es von Bedeutung sein, ob die gas- und wasserdichte Umhüllung evakuiert wird oder nicht.

Bei einer evakuierten oder nicht evakuierten Umhüllung können die folgenden Stoffe oder Stoffkombinationen eingesetzt werden:

Mischungen aus verschiedenen gefällten Kieselsäuren, wie z. B. Sipernat 22 LS und FK 500 LS, Sipernat 22 LS und FK 320 DS, FK 500 LS und FK 320 DS.

Mischungen aus gefällten und pyrogenen Kieselsäuren, wie z. B. Sipernat 22 LS, FK 320 DS und/oder FK 500 LS mit Aerosil A 200 und/oder Aerosil A 300.

Mischungen aus gefällten Kieselsäuren und Kieselsäure -Gelen, wie Sipernat 22 LS, FK 320 DS und/oder FK 500 LS mit Kieselsäuregelen (z. B. die Typen Syloid 72 und Syloid 244 der Fa. Grace, Worms).

Mischungen aus gefällten Kieselsäuren und mineralischen Stoffen, wie z. B. Sipernat 22 LS, FK 320 DS und/oder FK 500 LS mit Perliten, Kaolinit, Montmorillonit, Glimmer, Zeolithen und/oder Calciumsulfat (Gips).

Mischungen aus gefällten Kieselsäuren und vermahlenen Gläsern oder glasartigen Stoffen, wie z. B. Sipernat 22 LS, FK 320 DS und/oder FK 500 LS mit Glasmehl und/oder sehr feiner Glaswolle.

Mischungen aus gefällten Kieselsäuren und Rußen, wie z. B. Sipernat 22 LS, FK 320 DS und/oder FK 500 LS mit Furnace-Rußen, Flammrußen und/oder Gasrußen.

Mischungen aus gefällten Kieselsäuren und synthetischen Stoffen, wie z. B. Sipernat 22 LS, FK 320 DS und/oder FK 500 LS mit synthetischen oder natürlichen Zeolithen oder Aluminiumsilikaten oder anderen

2

silikatischen Stoffen (Calciumsilikat, Kieselgur, Extrusil).

Mischungen aus gefällten Kieselsäuren und synthetischen Abfallstoffen, wie z. B. Sipernat 22 LS, FK 320 DS und/ oder FK 500 LS mit Flugstäuben, Kraftwerksaschen, Aschen von Verbrennungsanlagen aller Art.

Mischungen aus gefällten Kieselsäuren und nichtmetallischen Elementen, wie z. B. Sipernat 22 LS, FK 320 DS und/oder FK 500 LS mit Schwefel und oder vermahlener Kohle.

Mischungen aus gefällten Kieselsäuren und Fasern, wie z. B. Sipernat 22 LS, FK 320 DS und/oder FK 500 LS mit anorganischen oder organischen Fasern (Zellwolle oder feine Kunststoff-Fasern aller Art).

Mischungen aus gefällten Kieselsäuren und pyrogenen Metalloxiden, wie z. B. Sipernat 22 LS, FK 320 DS und/ oder FK 500 LS mit pyrogenem Aluminiumoxid, Eisenoxid und/ oder Titandioxid.

Pyrogene Kieselsäuren, wie z. B. A 200, A 300, A 380, A 450 (OX 50), hydrophobierte Aerosil-Typen, speziell vorbehandelte Aerosile, Aerosil MOX-Typen, Aerosil COK 84.

Mischungen verschiedener pyrogener Kieselsäuren, wie z. B. A 200 und A 300, A 200 oder A 300 mit hydrophoben pyrogenen Kieselsäuren, A 200 oder A 300 mit speziell vorbehandelten Aerosil-Typen.

Mischungen aus pyrogenen Kieselsäuren und Kieselsäure-Gelen, wie z. B. A 200 und/oder A 300 mit Kieselsäuregelen (z. B. die Typen Syloid 72 und Syloid 244 der Fa. Grace, Worms).

Mischungen aus pyrogenen Kieselsäuren und mineralischen Stoffen, wie z. B. A 200 und/oder A 300 mit Perliten Kaolinit, Montmorillonit, Glimmer, Zeolithen und/oder Calciumsulfat (Gips).

Mischungen aus pyrogenen Kieselsäuren und vermahlenen Gläsern oder glasartigen Stoffen, wie z. B. A 200 und/ oder A 300 mit Glasmehl und/oder sehr feiner Glaswolle.

Mischungen aus pyrogenen Kieselsäuren und Rußen, Gasrußen, wie z. B. A 200 und/oder A 300 mit Furnace-Rußen, Flammrußen und/oder Gasrußen, Mischungen aus pyrogenen Kieselsäuren und synthetischen Stoffen, wie z. B. A 200 und/oder A 300 mit synthetischen oder natürlichen Zeolithen oder Aluminiumsilikaten oder anderen silikatischen Stoffen (Calciumsilikat, Kieselgur, Extrusil).

Mischungen aus pyrogenen Kieselsäuren und synthetischen Abfallstoffen, wie z. B. A 200 und/oder A 300 mit Flugstäuben, Kraftwerksaschen, Aschen von Verbrennungsanlagen aller Art.

Mischungen aus pyrogenen Kieselsäuren und nichtmetallischen Elementen, wie z. B. A 200 und/oder A 300 mit Schwefel und/oder vermahlener Kohle.

Mischungen aus pyrogenen Kieselsäuren und Fasern, wie z. B. A 200 und/oder A 300 mit anorganischen oder orgarischen Fasern (Zellwolle oder feine Kunstoff-Fasern aller Art). Mischungen aus pyrogenen Kieselsäuren und pyrogenen Metalloxiden, wie z. B. A 200 und/oder A 300 mit pyrogenem Aluminiumoxid, Eisenoxid, Titandioxid.

Ruße, wie z. B. Furnace-Ruße, Flammruße, Gasruße.

Mischungen aus verschiedenen Rußen, wie z. B. Furnace -Ruße mit Flammrußen, Furnace-Ruße mit Gasrußen, Flammruße mit Gasrußen.

Mischungen aus Rußen und Kieselsäure-Gelen, wie z. B. Ruße oder Rußmischungen mit Kieselsäuregelen (z. B. die Typen Syloid 72 und Syloid 244 der Fa. Grace, Worms).

Mischungen aus Rußen und mineralischen Stoffen, wie z. B. Ruße oder Rußmischungen mit Perliten, Kaolinit, Montmorillonit, Glimmer, Zeolithen und/oder Calciumsulfat (Gips).

Mischungen aus Rußen und vermahlenen Gläsern oder glasartigen Stoffen, wie z. B. Ruße oder Rußmischungen mit Glasmehl und/oder sehr feiner Glaswolle.

Mischungen aus Rußen und synthetischen Stoffen, wie z. B. Ruße oder Rußmischungen mit synthetischen oder natürlichen Zeolithen oder Aluminiumsilikaten oder anderen silikatischen Stoffen (Calciumsilikat, Kieselgur, Extrusil).

Mischungen aus Rußen und synthetischen Abfallstoffen, wie z. B. Ruße oder Rußmischungen mit Flugstäuben, Kraftwerksaschen, Aschen von Verbrennungsanlagen aller Art.

Mischungen aus Rußen und nichtmetallischen Elementen, wie z. B. Ruße oder Rußmischungen mit Schwefel und/oder vermahlener Kohle.

Mischungen aus Rußen und Fasern, wie z. B. Ruße oder Rußmischungen mit anorganischen oder organischen Fasern (Zellwolle oder feine Kunststoff-Fasern aller Art).

Mischungen aus Rußen und pyrogenen Metalloxiden, wie z. B. Ruße oder Rußmischungen mit pyrogenem Aluminiumoxid, Eisenoxid, Titandioxid.

Zeolithe, wie z. B. Zeolith A, Zeolith X, Zeolith Y, vorbehandelte Zeolithe.

Mischungen aus verschiedenen Zeolithen, wie z. B. Zeolith X mit Zeolith Y.

Mischungen aus Zeolithen und Kieselsäure-Gelen, wie z. B. Zeolithe oder Zeolithmischungen mit Kieselsäuregelen (z. B. die Typen Syloid 72 und Syloid 244 der Fa. Grace, Worms).

Mischungen aus Zeolithen und mineralischen Stoffen, wie z. B. Zeolithe oder Zeolithmischungen mit Perliten, Kaolinit, Montmorillonit, Glimmer, und/oder Calciumsulfat (Gips).

Mischungen aus Zeolithen und vermahlenen Gläsern oder glasartigen Stoffen, wie z. B. Zeolithe oder Zeolithmischungen mit Glasmehl und/oder sehr feiner Claswolle.

Mischungen aus Zeolithen und synthetischen Stoffen, wie z. B. Zeolithe oder Zeolithmischungen mit synthetischen Aluminiumsilikaten oder anderen silikatischen Stoffen (Calciumsilikat, Kieselgur, Extrusil).

Mischungen aus Zeolithen und synthetischen Abfallstoffen, wie z. B. Zeolithe oder Zeolithmischungen mit Flugstäuben, Kraftwerksaschen, Aschen von Verbrennungsanlagen aller Art.

Mischungen aus Zeolithen und nichtmetallischen Elementen, wie z. B. Zeolithe oder Zeolithmischungen mit Schwefel und/oder vermahlener Kohle.

Mischungen aus Zeolithen und Fasern, wie z. B. Zeolithe oder Zeolithmischungen mit anorganischen oder organischen Fasern (Zellwolle oder feine Kunststoff-Fasern aller Art).

Mischungen aus Zeolithen und pyrogenen Metalloxiden, wie z. B. Zeolithe order Zeolithmischungen mit pyrogenem Aluminiumoxid, Eisenoxid, Titandioxid.

Kieselgele, wie z. B. Syloid 72 (Fa. Grace, Worms), Syloid 244 (Fa. Grace, Worms).

Mischungen aus unterschiedlichen Kieselsäuregelen, wie z. B. Syloid 72 mit Syloid 244 (Fa. Grace, Worms), unterschiedlich vorbehandelte Kieselsäuregele.

Mischungen aus Kieselgelen und mineralischen Stoffen, wie z. B. Kieselgele oder Kieselgelmischungen mit Perliten, Kaolinit, Montmorillonit, Glimmer und/oder Calciumsulfat (Gips).

Mischungen aus Kieselgelen und vermahlenen Gläsern oder glasartigen Stoffen, wie z. B. Kieselgele oder Kieselgelmischungen mit Glasmehl und/oder sehr feiner Glaswolle.

Mischungen aus kieselgelen und synthetischen Stoffen, wie z. B. Kieselgele oder Kieselgelmischungen mit synthetischen Aluminiumsilikaten oder anderen silikatischen Stoffen (Calciumsilikat, Kieselgur, Extrusil).

Mischungen aus Kieselgelen und synthetischen Abfallstoffen, wie z. B. Kieselgele oder Kieselgelmischungen mit Flugstäuben, Kraftwerksaschen, Aschen von Verbrennungsanlagen aller Art.

Mischungen aus Kieselgelen und nichtmetallischen Elementen, wie z. B. Kieselgele oder Kieselgelmischungen mit Schwefel und/oder vermahlener Kohle.

Mischungen aus Kieselgelen und Fasern, wie z. B. Kieselgele oder Kieselgelmischungen mit anorganischen oder organischen Fasern (Zellwolle oder feine Kunststoff-Fasern aller Art).

Mischungen aus Kieselgelen und pyrogenen Metalloxiden, wie z. B. Kieselgele oder Kieselgelmischungen mit pyrogenem Aluminiumoxid, Eisenoxid, Titandioxid.

Aluminiumsilikate.

Mischungen aus unterschiedlichen Aluminiumsilikaten, wie z. B. verschiedene Aluminiumsilikat-Typen, unterschiedlich vorbehandelte Aluminiumsilikate.

Mischungen aus Aluminiumsilikaten und mineralischen Stoffen, wie z. B. Aluminiumsilikate oder Aluminiumsilikatmischungen mit Perliten, Kaolinit, Montmorillonit, Glimmer und/oder Calciumsulfat (Gips).

Mischungen aus Aluminiumsilikaten und vermahlenen Gläsern oder glasartigen Stoffen, wie z. B. Aluminiumsilikate oder Aluminiumsilikatmischungen mit Glasmehl und/oder sehr feiner Glaswolle.

Mischungen aus Aluminiumsilikaten und synthetischen Stoffen, wie z. B. Aluminiumsilikate oder Aluminiumsilikatmischungen mit anderen silikatischen Stoffen (Calciumsilikat, Kieselgur, Extrusil).

Mischungen aus Aluminiumsilikaten und synthetischen Abfallstoffen, wie z. B. Aluminiumsilikate oder Aluminiumsilikatmischungen mit Flugstäuben, Kraftwerksaschen, Aschen von Verbrennungsanlagen aller Art.

Mischungen aus Aluminiumsilikaten und nichtmetallischen Elementen, wie z. B. Aluminiumsilikate oder Aluminiumsilikatmischungen mit Schwefel und/oder vermahlener Kohle.

Mischungen aus Aluminiumsilikaten und Fasern, wie z. B. Aluminiumsilikate oder Aluminiumsilikatmischungen mit anorganischen oder organischen Fasern (Zellwolle oder feine Kunststoff-Fasern aller Art).

Mischungen aus Aluminiumsilikaten und pyrogenen Metalloxiden, wie z. B. Aluminiumsilikate oder Aluminiumsilikatmischungen mit pyrogenem Aluminiumoxid, Eisenoxid, Titandioxid.

Metalloxide (pyrogen oder gefällt), wie z. B. Aluminiumoxid, Eisenoxide, Titandioxid, Zirkondioxid.

Mischungen aus unterschiedlichen Metalloxiden (pyrogen oder gefällt), wie z. B. Aluminiumoxid mit verschiedenen Eisenoxiden, Aluminiumoxid mit Titandioxid, Titandioxid mit verschiedenen Eisenoxiden.

Mischungen aus Metalloxiden (pyorgen oder gefällt) und mineralischen Stoffen, wie z. B. Aluminiumoxid, verschiedene Eisenoxide, Titandioxid und/oder Zirkondioxid mit Perliten, Kaolinit, Montmorillonit, Glimmer und/oder Calciumsulfat (Gips).

Mischungen aus Metalloxiden (pyrogen oder gefällt) und vermahlenen Gläsern oder glasartigen Stoffen, wie z. B. Aluminiumoxid, verschiedene Eisenoxide, Titandioxid und/ oder Zirkondioxid mit Glasmehl und/oder sehr feiner Glaswolle.

Mischungen aus Metalloxiden (pyrogen oder gefällt) und synthetischen Stoffen, wie z. B. Aluminiumoxid, verschiedene Eisenoxide, Titandioxid und/oder Zirkondioxid mit silikatischen Stoffen (Calciumsilikat, Kieselgur, Extrusil).

Mischungen aus Metalloxiden (pyrogen oder gefällt) und synthetischen Abfallstoffen, wie z. B. Aluminiumoxid, verschiedene Eisenoxide, Titandioxid und/oder Zirkondioxid mit Flugstäuben, Kraftwerksaschen, Aschen von Verbrennungsanlagen aller Art.

Mischungen aus Metalloxiden (pyrogen oder gefällt) und nichtmetallischen Elementen, wie z. B. Aluminiumoxid, verschiedene Eisenoxide, Titandioxid und/oder Zirkondioxid mit Schwefel und/oder vermahlener Kohle.

Mischungen aus Metalloxiden (pyrogen oder gefällt) und Fasern, wie z. B. Aluminiumoxide, verschiedene Eisenoxide, Titandioxid und/oder Zirkondioxid mit anorganischen oder organischen Fasern (Zellwolle oder feine Kunststoff-Fasern aller Art).

Als gefällte Kieselsäuren können weiterhin eingesetzt werden:

HISIL T 600, HISIL T 690 der Fa. PPG

Tixosil 333 der Fa. Rhône-Poulenc

Hoesch SM 614 der Fa. AKZO

Zeothix 265 und Zeothix 177 der Fa. Huber


Beispiele

Mit den folgenden Mischungen wurden nach dem erfindungsgemäßen Verfahren die erfindungsgemäßen Formkörper hergestellt (Tabelle 1).

Die jeweils ermittelten Werte für die Wärmeleitfähigkeit sind ebenfalls in der Tabelle 1 aufgeführt.


Tabelle 1


1. Mischungen von Fällungskieselsäuren mit Perliten:


| Fällungs-kieselsäure | Anteil Gew.-% | weitere Komponente | Anteil Gew.-% | Dichte des Form-körpers (g/l) | Wärmeleitfähigkeit (mW/m/K) (bei p < 1 mbar) |
|---|---|---|---|---|---|
| Sipernat 22 LS | 35 | Perlite | 75 | 210 | 22 |
| Sipernat 22 LS | 50 | Perlite | 50 | 190 | 18 |
| Sipernat 22 LS | 75 | Perlite | 25 | 200 | 12 |
| FK 500 LS | 25 | Perlite | 75 | 215 | 20 |
| FK 500 LS | 50 | Perlite | 50 | 205 | 16 |
| FK 500 LS | 75 | Perlite | 25 | 195 | 12 |

Tabelle 1 (Fortsetzung)

2. Mischungen von Aerosil A 200 und Aerosil A 300 mit
   Perliten:

| Aerosil-Type | Anteil Gew.-% | weitere Komponente | Anteil Gew.-% | Dichte des Form- körpers (g/l) | Wärmeleitfähigkeit (mW/m/K) (bei $p < 1$ mbar) |
|---|---|---|---|---|---|
| A 200 | 25 | Perligran- Pulver (Perlite) | 75 | 260 | 10 |
| A 200 | 50 | Perligran- Pulver (Perlite) | 50 | 190 | 9 |
| A 200 | 75 | Perligran- Pulver (Perlite) | 25 | 155 | 9 |
| A 300 | 25 | Perligran- Pulver (Perlite) | 75 | 260 | 10 |
| A 300 | 50 | Perligran- Pulver (Perlite) | 50 | 190 | 9 |
| A 300 | 75 | Perligran- Pulver (Perlite) | 25 | 150 | 7 |

Die erfindungsgemäß einsetzbaren pulverförmigen bzw. faserförmigen Stoffe sind beispielsweise durch die folgenden physikalisch-chemischen Kenndaten gekennzeichnet:

6

| | | AEROSIL 200 | AEROSIL 300 | AEROSIL 380 | AEROSIL OX 50 | AEROSIL COK 84 |
|---|---|---|---|---|---|---|
| Oberfläche nach BET | $m^2$/g | $200\pm25$ | $300\pm30$ | $300\pm30$ | $50\pm15$ | $170\pm30$ |
| Mittlere Größe der Primärteilchen | Nanometer | 12 | 7 | 7 | 40 | – |
| Stampfdichte 1) | g/l | ca. 50 | ca. 50 | ca. 50 | ca. 130 | ca. 50 |
| Trocknungsverlust 2) (2h bei 105°C) bei Verlassen des Werkes | % | <1,5 | <1,5 | <1,5 | <1,5 | <1,5 |
| Glühverlust 2) 7) (2h bei 1000°C) | % | <1 | <2 | <2,5 | <1 | <1 |
| pH-Wert 3) (in 4%iger wäßriger Dispersion) | | 3,6-4,3 | 3,6-4,3 | 3,6-4,3 | 3,8-4,5 | 3,6-4,3 |
| $SiO_2$ 5) | % | >99,8 | >99,8 | >99,8 | >99,8 | 82-86 |
| $Al_2O_3$ 5) | % | <0,05 | <0,05 | <0,05 | <0,08 | 14-18 |
| $Fe_2O_3$ 5) | % | <0,003 | <0,003 | <0,003 | <0,01 | <0,1 |
| $TiO_2$ 5) | % | <0,03 | <0,03 | <0,03 | <0,03 | <0,03 |
| HCl 5) 10) | % | <0,025 | <0,025 | <0,025 | <0,01 | <0,1 |
| Siebrückstand 4) nach Mocker (45 μm) | % | <0,05 | <0,05 | <0,05 | <0,1 | <0,1 |

...

EP 0 355 294 A2

EP 0 355 294 A2

1) nach DIN 52 194

2) nach DIN 55 921

3) nach DIN 53 200

4) nach DIN 53 580

5) bezogen auf die 2 Stunden bei 1000 °C geglühte Substanz

7) bezogen auf die 2 Stunden bei 105 °C getrocknete Substanz.

10) HCl-Gehalt ist Bestandteil des Glühverlustes

| | | EXTRUSIL |
|---|---|---|
| Oberfläche nach BET 1) | $m^2/g$ | 35 |
| Mittlere Größe der Agglomerate | $\mu m$ | 5 8) |
| Stampfdichte 2) | g/l | 300 |
| Trocknungsverlust (2h bei 105 °C) bei Verlassen des Lieferwerkes 3) | % | 6 |
| Glühverlust (2h bei 1000 °C) 4) 10) | % | 7 |
| pH-Wert (in 5%iger wäßriger Dispersion) 5) | | 10 |
| DBP-Absorption 6) 10) | g/100g | 160 |
| $SiO_2$ 11) | % | 91 |
| $Al_2O_3$ 11) | % | 0,2 |
| CaO 11) | % | 6 |
| $Na_2O$ 11) | % | 2 |
| $Fe_2O_3$ 11) | % | 0,03 |
| $SO_3$ 11) | % | - |
| Cl- 11) | % | 0,8 |
| Siebrückstand (nach Mocker, 45 $\mu m$) 7) | % | 0,2 |

1) nach DIN 66 131
2) nach DIN ISO 787/XI, JIS K 5101/18 (nicht gesiebt)
3) nach DIN ISO 787/II, ASTM D 280, JIS K 5101/21
4) nach DIN 55921, ASTM D 1208, JIS K 5101/23
5) nach DIN ISO 787/IX, ASTM D 1208, JIS K 5101/24
6) nach DIN 53601, ASTM D 2414
7) nach DIN ISO 787/XVIII, JIS K 5101/20
8) Coulter Counter, 100 $\mu m$ Kapillare
10) bezogen auf die 2 Stunden bei 105 °C getrocknete Substanz
11) bezogen auf die 2 Stunden bei 1000 °C geglühte Substanz

8

| | | FK 320 DS | FK 500 LS | SIPERNAT 22 LS |
|---|---|---|---|---|
| Oberfläche nach BET 1) | m²/g | 170 | 450 | 190 |
| Mittlere Größe der Agglomerate | μm | 4 9) | 3,5 9) | 4,5 9) |
| Stampfdichte 2) | g/l | 80 | 80 | 80 |
| Trocknungsverlust (2h bei 105 °C) bei Verlassen des Lieferwerkes 3) | % | 6 | 3 | 6 |
| Glühverlust (2h bei 1000 °C) 4) 10) | % | 5 | 5 | 5 |
| pH-Wert (in 5%iger wässriger Dispersion) 5) | | 6,3 | 6,5 | 6,3 |
| DBP-Absorption 6) 10) | g/100g | 230 | 330 | 270 |
| SiO2 11) | % | 98 | 98,5 | 98 |
| Na2O 11) | % | 1 | 0,6 | 1 |
| Fe2O3 11) | % | 0,03 | 0,03 | 0,03 |
| SO3 11) | % | 0,8 | 0,7 | 0,8 |
| Siebrückstand (nach Mocker, 45 μm) 7) | % | 0,01 | 0,02 | 0,1 |

1) nach DIN 66 131
2) nach DIN ISO 787/XI, JIS K 5101/18 (nicht gesiebt)
3) nach DIN ISO 787/II, ASTM D 280, JIS K 5101/21
4) nach DIN 55 921, ASTM D 1208, JIS K 5101/23
5) nach DIN ISO 787/IX, ASTM D 1208, JIS K 5101/24
6) nach DIN 53 601, ASTM D 2414
7) nach DIN ISO 787/XVIII, JIS K 5101/20
9) Coulter Counter, 50 μm Kapillare
10) bezogen auf die 2 Stunden bei 105 °C betrocknete Substanz
11) bezogen auf die 2 Stunden bei 1000 °C geglühte Substanz

| Hoesch SM 614 | |
|---|---|
| SiO2-Gehalt % | 87 |
| Glühverlust (1 Std. bei 1000 °C) % | 9 |
| Trocknungsverlust (2 Std. bei 120 °C) % | 6 |
| pH-Wert (10 % wäßrige Lösung) | 6 |
| mittlere Teilchengröße gefällte Kieselsäure μm | 8 |

| Huber | Zeothix 265 | Zeothix 177 |
|---|---|---|
| mittlere Teilchengröße μm | 1,7 | 1,5 |
| Trocknungsverlust 2 Std. bei 105 °C) % | 7,0 | |
| Oil-Absorption ml/100 g | 220 | 235 |
| pH-Wert | 7 | 7 |
| BET-Oberfläche m²/g | 260 | 175 |
| gefällte Kieselsäuren | | |

| PPG | HISIL T 600 | HISIL T 690 |
|---|---|---|
| Oberfläche m²/g | 200 | 150 |
| mittlere Teilchengröße nm | 15 | 21 |
| pH | 3,5 | 7 |
| Trocknungsverlust % | 1 - 2 | 10 |
| gefällte Kieselsäuren | | |

| Rhône-Poulenc Tixosil 333 | |
|---|---|
| pH | 6,8 |
| Glühverlust (900 °C) % | ≤ 11 |
| Teilchengröße μm | 2,3 |
| BET-Oberfläche m²/g | 300 |
| Oil-Adsorption ml/100 g | 370 |
| SiO₂ % | 97 |
| gefällte Kieselsäure | |

| Kieselgele | Syloid 72 | Syloid 244 |
|---|---|---|
| Porenvolumen ml/g | 1,2 | 1,6 |
| Mittlere Teilchengröße μm | 4 | 2 |
| Naßsiebrückstand % | 0,02 | 0,02 |
| Trocknungsverlust % | 1 | 4 |
| Glühverlust % | 5 | 7 |
| SiO₂-Gehalt % | 99 | 99,5 |
| pH-Wert | 6 | 6 |

**Ansprüche**

1. Formkörper, vorzugsweise plattenförmig, für die Verwendung als Wärmedämmung, bestehend aus
   a) einem feinverteilten, pulverförmigen bzw. faserförmigen Stoff,
   b) einer gas- und wasserdichten Umhüllung, die diesen feinverteilten, pulverförmigen bzw. faserförmigen Stoff enthält.

2. Formkörper gemäß Anspruch 1, dadurch gekennzeichnet, daß der pulverförmige bzw. faserförmige Stoff in einer mikroporösen Umhüllung getrocknet wurde.

3. Formkörper nach Anspruch 2, dadurch gekennzeichnet, daß die mikroporöse Umhüllung in die gas- und wasserdichte Umhüllung eingebracht wurde.

4. Verfahren zur Herstellung eines Formkörpers zur Wärmedämmung, dadurch gekennzeichnet, daß man
   a) gegebenenfalls einen feinverteilten, pulverförmigen bzw. faserförmigen Stoff bei einer Temperatur, die ausreicht, um das Oberflächenwasser auszutreiben, trocknet,
   b) den pulverförmigen bzw. faserförmigen Stoff, gegebenenfalls in eine Form verpreßt,
   c) den gegebenenfalls getrockneten und gegebenenfalls verpreßten pulverförmigen bzw. faserförmigen Stoff in eine gas- und wasserdichte Umhüllung, die eine Öffnung zum Evakuieren aufweist, einbringt,
   d) die gas- und wasserdichte Umhüllung gegebenenfalls evakuiert und
   e) die Evakuierungsöffnung der gas- und wasserdichten Umhüllung verschließt.

5. Verfahren nach Anspruch 4, dadurch gekennzeichnet, daß man den pulverförmigen bzw. faserförmigen Stoff in einer mikroporösen Umhüllung trocknet.

6. Verfahren nach Anspruch 4, dadurch gekennzeichnet, daß man den pulverförmigen bzw. faserförmigen Stoff in einer mikroporösen Umhüllung verpreßt und gegebenenfalls danach trocknet.